# EUROPÄISCHE PATENTSCHRIFT

(11) **EP 1 281 883 B1**
(45) Veröffentlichungstag und Bekanntmachung des Hinweises auf die Patenterteilung: **14.01.2009**
(21) Anmeldenummer: 02012256.0
(22) Anmeldetag: 04.06.2002
(51) Int. Cl.: F16D 1/072, F16D 1/08

(54) **Baureihe von Wellen und Verfahren zur Fertigung**
Series of shafts and manufacturing method therefore
Game d'arbres et procédé de leur fabrication

(30) Priorität: 30.07.2001 DE 10137025
(43) Veröffentlichungstag der Anmeldung: 05.02.2003
(73) Patentinhaber: Sew-Eurodrive GmbH & Co. KG, 76646 Bruchsal (DE)
(72) Erfinder: Häcker, Uwe, 76356 Weingarten (DE)

(56) Entgegenhaltungen:
- EP-A- 0 482 929
- EP-A- 0 661 474
- DE-A- 4 134 552
- US-A- 4 886 392
- US-A- 5 716 156

## Beschreibung

Die Erfindung betrifft eine Baureihe von Wellen und ein Verfahren zur Fertigung. Die Erfindung umfasst auch anstatt der Wellen entsprechend ausgeführte Schafte.

Aus der EP 0 339 380 B1 ist eine Vorrichtung zur koaxialen drehfesten Verbindung zweier Teile bekannt, bei der ein Quergewindestift zur axialen Fixierung eingesetzt wird. Die Vorrichtung ist jedoch aufwendig zu fertigen, da der Quergewindestift ein zusätzliches Teil darstellt und eine entsprechende, für diesen Quergewindestift geeignete Gewindebohrung zu fertigen ist.

Aus der DE 37 32 223 C2 ist ein Presspassungsaufbau für eine Rotorwelle bekannt. Dabei wird eine Welle mit ihrem verzahnten Bereich eingeführt in eine Bohrung eines Aufnahmeteils, wobei beim formschlüssigen Einpressen Späne entstehen. Zum Sammeln der beim formschlüssigen Einpressen entstehenden Späne sind Ringnuten vorgesehen. Außerdem weist die Welle mindestens zwei Passbereiche (Fig. 4, 6, 7) auf. Die Fertigung des Presspassungsaufbaus ist somit insbesondere wegen der mindestens zwei Passbereiche und den Ringnuten aufwendig und kostspielig.

Aus der DE 41 34 552 A1 ist eine Ritzel-Befestigung für Planetengetriebe bekannt, bei der ein Ritzel mit einem Passbereich und einer genormten, gehärteten und geschliffenen Rändelverzahnung versehen ist und in das Aufnahmeteil bei erhöhter Temperatur eingepresst wird. Zum Sammeln der Späne sind ebenfalls Ringnuten vorgesehen. Der Passbereich und die Verzahnung weisen verschiedene Außendurchmesser auf. Die Fertigung dieser Ritzel-Befestigung ist ebenfalls aufwendig und kostspielig, insbesondere wegen den Ringnuten und den verschiedenen Außendurchmessern der Verzahnung und des Passbereichs.

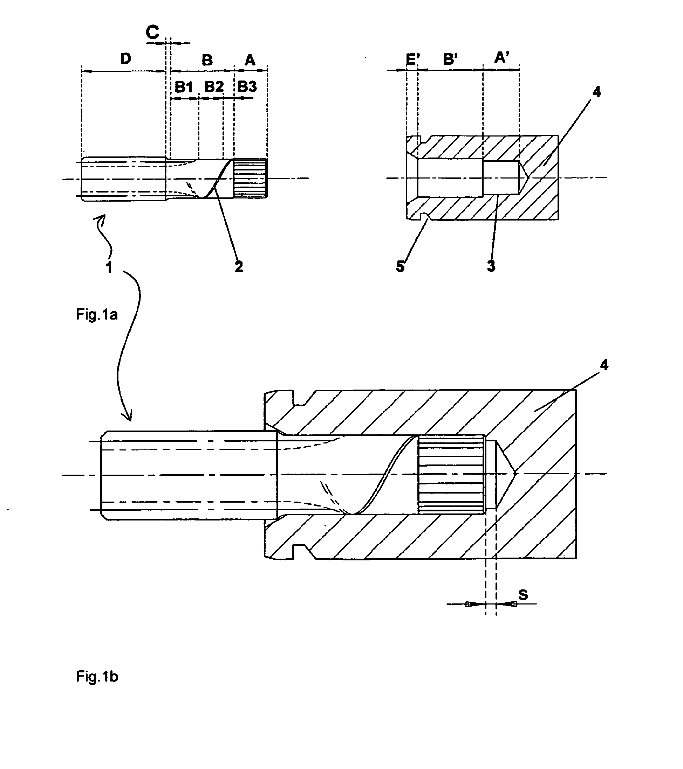

Aus der EP 0 784 758 B1 ist eine Wellen-Befestigung bekannt, die zwei Passbereiche (Fig. 1 und 2, Bereiche A und C) aufweist. Beim Einführen der Welle in die Bohrung eines Aufnahmeteils wird der Formschluss durch ein formschlüssigen Einpressen erreicht. Das Drehmoment wird von dem verzahnten oder gerändelten Bereich B übertragen. Nachteilig ist, dass der Bereich B keine Axialkräfte übertragen kann. Nachteilig ist auch, dass zwei Passbereiche notwendig sind, da somit eine große Baulänge notwendig ist. Außerdem ist die Fertigung zweier Passbereiche sehr kostspielig. Des Weiteren weist die Bohrung drei verschiedene Durchmesser auf, die ebenfalls aufwendig zu fertigen sind. Wesentlicher weiterer Nachteil ist auch, dass die Verzahnung oder Rändelung des Bereiches B nach einer gewissen Betriebszeit Verschleiß aufweisen kann, der sogar zum Ausschlagen führen kann. Wenn der Bereich B bei der Drehmomentübertragung versagt, ist keine Drehmomentübertragung mehr ausführbar. Somit könnten in diesem Fall sogar Menschen gefährdet werden. Auch im Fall des nur geringen Verschleißes tritt schon im Normalbetrieb Geräuschbildung auf, da die Zähne der Verzahnung oder Rändelung im Bereich B und B' aufeinanderschlagen abhängig von Drehzahlschwankungen. Die notwendigen Bereiche A und C stellen ausschließliche Zentrierhilfen dar, die nichts zur Drehmomentübertragung beitragen.

Aus der EP 0 661 474 B1 ist eine Wellen-Befestigung bekannt, die ebenfalls zwei Passbereiche und eine Bohrung mit drei verschiedenen Durchmessern aufweist. Auch eine solche Wellen-Befestigung ist aufwendig zu fertigen. In einer anderen Variante derselben Schrift wird auch eine Wellenbefestigung mit nur zwei verschiedenen Durchmessern der Bohrung offenbart. Auch diese Variante ist kostspielig, da die Passbereiche und die Innenwände der Bohrung derart genau bearbeitet werden müssen, dass einerseits beim Einführen der Welle zum Einpressen in die Bohrung des Aufnahmeteils keine Späne entstehen und andererseits nach Einführen, also im eingepressten Zustand nach Montage, keine Zwischenräume zwischen der Welle und der Innenwand der Bohrung entstehen. Das Drehmoment wird von dem verzahnten oder gerändelten Bereich B übertragen. Nachteilig ist auch, dass der Bereich B keine Axialkräfte übertragen kann. Wesentlicher weiterer Nachteil ist des Weiteren, dass die Verzahnung oder Rändelung des Bereiches B nach einer gewissen Betriebszeit Verschleiß aufweisen kann, der sogar zum Ausschlagen führen kann. Wenn der Bereich B bei der Drehmomentübertragung versagt, ist keine Drehmomentübertragung mehr ausführbar. Somit könnten in diesem Fall sogar Menschen gefährdet werden. Auch im Normalbetrieb tritt ein, wenn auch geringer, Verschleiß auf und erhöht somit das Spiel und die Geräuschbildung, da die Zähne der Verzahnung oder Rändelung im Bereich B und B' abhängig von Drehzahlschwankungen aufeinandertreffen. Die notwendigen Bereiche A und C stellen ausschließliche Zentrierhilfen dar, die nichts zur Drehmomentübertragung beitragen.

Der Erfindung liegt daher die Aufgabe zugrunde, eine Wellen-Befestigung weiterzubilden, wobei die Fertigungs- und Lagerkosten gering gehalten werden sollen und daher die Wellen-Befestigung kostengünstig mit wenig Aufwand herstellbar sein soll.

Erfindungsgemäß wird die Aufgabe bei der Baureihe nach den in Anspruch 1 und bei dem Verfahren nach den in Anspruch 10 angegebenen Merkmalen gelöst.

Die Baureihe von Wellen zur Befestigung in einer Bohrung eines Aufnahmeteiles umfasst dabei mindestens zwei verschiedene Baugrößen, die jeweils verschiedene Varianten von Wellen umfassen.

Wesentliche Merkmale der Erfindung bei der Baureihe sind, dass die folgenden Merkmale vorgesehen sind
a) die Welle jeweils mindestens vier axiale Bereiche A, B, C und D besitzt, die in alphabetischer Reihenfolge der sie bezeichnenden Buchstaben aneinandergrenzen und von denen D einen größeren Außendurchmesser als A und/oder B hat;
b) innerhalb einer Baugröße mehrere Varianten von Wellen umfasst sind, die im Bereich D der Welle jeweils verschieden verzahnt sind;
c) bei der Welle der Bereich A verzahnt oder gerändelt ist;
d) innerhalb einer ersten Baugröße mindestens bei einer ersten Variante die Welle im Bereich B nicht verzahnt ist;
e) innerhalb der ersten Baugröße bei mindestens einer zweiten Variante die durch die Zahnlücken der Verzahnung des Bereiches D gebildeten Ausnehmungen sich in ihren Fußzonen mindestens teilweise auch in den Bereich B der Welle erstrecken, also der Bereich B einen Teilbereich B1 umfasst, in den sich die Ausnehmungen erstrecken, und der Bereich B weitere Teilbereiche, insbesondere B2 und B3, umfasst, in denen keine solchen Ausnehmungen vorgesehen sind;
f) die Bohrung im Aufnahmeteil mindestens in drei axial aneinandergrenzende Bereiche A', B' und E' aufgeteilt ist, wobei der Bereich A' bei in dem Aufnahmeteil befestigter Welle dem Bereich A zugeordnet ist und wobei der Bereich B' bei in dem Aufnahmeteil befestigter Welle dem Bereich B zugeordnet ist, und der Bereich E' sich an den Bereich B' anschließt;
g) die Bohrung im Aufnahmeteil im Bereich B' einen Innendurchmesser aufweist, der mathematisch gleich oder größer ist als der Wert d;
h) der Wellenbereich B einen Teilbereich B3 umfasst, der sich an den Bereich A anschließt und der Außendurchmesser des Bereiches B3 dem Außendurchmesser des Bereiches A gleicht und kleiner ist als der Wert d;
i) der Wellenbereich B weitere Teilbereiche B1 und B2 umfasst, wobei sich der B1 an den Bereich B2 anschließt und der Bereich B2 an den Bereich B3 anschließt und wobei der Außendurchmesser der weiteren Bereich B1 und B2 stets derart größer ist als der Wert d, dass in den Bereichen B1 und B2 bei in dem Aufnahmeteil eingepresster Welle eine reib- und/oder kraftschlüssige Verbindung vorgesehen ist;
j) bei in dem Aufnahmeteil eingepresster Welle diese mit ihrem verzahnten oder gerändelten Bereich A infolge des Einpressens der Welle formschlüssig in den Bereich A' der Bohrung eingeschnitten ist.

Von Vorteil ist dabei, dass die Wellen-Befestigung im Normalbetrieb stets geräuscharm oder sogar geräuschlos bleibt, da das Drehmoment oder die Kraft im Normalbetrieb durch die reibund/oder kraftschlüssige Verbindung im Bereich B1 und B2 fließt.

### Außerdem überträgt die reib- und/oder kraftschlüssige Verbindung im Bereich B1 und B2 vorteiligerweise auch Axialkräfte.

Von Vorteil ist darüber hinaus, dass eine zentrische Aufnahme der zu befestigenden Welle oder des Schaftes, insbesondere Ritzelschaftes, geschaffen ist. Nach Einhalten entsprechend hoher Montagegenauigkeiten treten die Bereiche A, B3, B2, B1, C und D während des Einpressens nacheinander in die Bohrung des Aufnahmeteils ein. Da der Durchmesser des Bereiches A kleiner ist als der Innendurchmesser des Bereiches B', wird erst bei Eintreten des Bereiches B3 der Welle eine genaue Zentrierung ermöglicht. Denn der Durchmesser des Bereiches B3 ist etwas kleiner ausführbar als der Innendurchmesser des Bereiches B', insbesondere ein bis vier Hunderstel. Somit führt bei weiterem Einpressen der Bereich B3 die Welle zentrisch. Dadurch ist vorteiligerweise eine hohe Stabilität gegen Querkräfte gegeben. Statt der erwähnten Durchmesser-Differenz im Bereich von ein bis vier Hundertstel sind auch andere Durchmesserdifferenzen verwendbar, insbesondere unter Anwendung von Temperaturdifferenzen zwischen Aufnahmeteil und Welle beim Einpressen.

Beim weiteren Einführen der Welle werden dann die Bereiche A, B2 und B3 eingepresst. Somit entsteht im gerändelten oder verzahnten Bereich A eine formschlüssige Verbindung, die als Überlastsicherung einsetzbar ist.

Die eigentliche Kraft- und Drehmomentübertragung ist mittels der reib- und/oder kraftschlüssigen und gleichzeitig auch geräuscharmen oder sogar geräuschlosen Verbindung in den Bereichen B1 und B2 ermöglicht.

Weiterer Vorteil ist, dass bei eingepresster Welle im Betrieb sogar nach eventuellem Versagen der reib- und/oder kraftschlüssigen Verbindung in den Bereichen B1 und B2 der Bereich A und A' als formschlüssige Verbindung Drehmoment übertragen und gleichzeitig mittels der Bereiche B1, B2 und B3 eine Zentrierung zur Ableitung von Querkräften vorgesehen ist, sogar in einem solchen Überlastungs-Notfall.

Weiterer Vorteil der Erfindung ist, dass der erste Verzahnungsbereich A und der erste Bereich B3 denselben Außendurchmesser aufweisen. Somit ist die Fertigung der Welle vereinfacht und kostengünstig. Insbesondere ist das Überschleifen des gerändelten und dann gehärteten Bereiches A und das Schleifen des Bereiches B3 gleichzeitig ermöglicht.

Von Vorteil ist außerdem, dass die Fertigungs- und Lagerkosten gering gehalten werden, weil keine Kupplungen zwischen der Welle, insbesondere umfassend getriebeseitige Laufverzahnung, und dem Aufnahmeteil notwendig sind. Daher ist die Wellen-Befestigung kostengünstig mit wenig Aufwand herstellbar.

Von Vorteil ist auch, dass das Aufnahmeteil an seinem Ende mit einer Zentriereinrichtung vorsehbar ist, die zur zentrischen Aufnahme der Welle dient. Weil die axiale Ausdehnung des Bereiches A kleiner ist als die des Bereichs B bzw. B', ist die Welle während des Einführens der Welle in die Bohrung des Aufnahmeteils, insbesondere beim Einpressen der Rändelung des Bereiches A in das Material des Aufnahmeteils im Bereich A', geführt, weil der Außendurchmesser des Einsteckritzels im Bereich B3 dem Innendurchmesser des Aufnahmeteils im Bereich B' anpassbar ist. Somit ist die Welle beim Einfädeln und Einführen zentrisch gehalten. Diese wichtige zentrische Führung wird erreicht, obwohl die Welle im Bereich A und B3 nur einen Außendurchmesser aufweist und somit einfach und kostengünstig zu fertigen ist. Außerdem weist die Bohrung nicht mehrere sondern nur zwei verschiedene, einfach zu fertigende Bohrungsinnendurchmesser auf, nämlich im Bereich A' einen kleineren als im Bereich B'.

Wesentlicher Vorteil ist auch, dass die zentrische Führung durch die entsprechend ausgelegten, zueinander liegenden Bereich B3 und B' mit zunehmendem Einführen der Welle stärker wird. Querkräfte bewirken bei zunehmendem Einführen also eine immer geringere radiale Auslenkung der Welle.

Weiterer Vorteil ist bei der Erfindung, dass die Welle in den Bereichen A und B möglichst groß ausführbar ist, insbesondere nur wenig kleiner als der Außendurchmesser des verzahnten Bereiches D. Dies führt zu einer hohen Festigkeit, insbesondere bei Torsion. Bei anderen Varianten der Baureihe ist allerdings der Außendurchmesser des Bereiches D erheblich größer ausführbar, da die Verzahnungsdaten sich entsprechend unterscheiden. In diesem Fall ist der Bereich C zur Verminderung der Kerbwirkung wesentlich. Die genaue Form des Bereiches C ist durch Berechnungen mit Finite-Elemente-Methode optimierbar.

Weiterer Vorteil ist bei der Erfindung, dass die Ausnehmungen der Zahnlücken des Bereiches D über den Bereich C und in den Bereich B hineinlaufen dürfen, ohne dass die Festigkeit oder andere wesentliche Eigenschaften der Wellen-Befestigung beachtenswert verschlechtert wären, wobei dieser Teilbereich des Bereiches B mit B1 bezeichnet wird. Also ist auch mit der vorliegenden Erfindung die Verzahnung des Bereiches einfach und kostengünstig fertigbar bei gleichzeitig möglichst großem Durchmesser im Bereich C, B und A der Welle, also hoher Festigkeit. Die genaue Form des Verlaufes hängt von den Verzahnungsdaten des Bereiches D ab. Falls bei einer Variante innerhalb der Baugröße der Außendurchmesser des Bereiches D entsprechend groß ist, ist der Teilbereich B1 also nicht vorhanden.

Wesentlicher Kern der Erfindung ist, dass vorteiligerweise mit einer **nur einseitigen Führung beim Einführen** eine ausreichend hohe Zentriergenauigkeit erreichbar ist. Die Größe der Zentriergenauigkeit reicht sogar für einen Servoantrieb aus, insbesondere bei der Verbindung des Servomotors mit dem Servogetriebe. Gerade bei einem mit dem Servomotor zu verbindenden, schnell laufenden Planetengetriebe ist nämlich eine hohe Genauigkeit einzuhalten. Bei weiteren erfindungsgemäßen Ausführungsformen ist die Welle im Bereich D sogar als Sonne der eintreibenden ersten Getriebestufe verwendbar. Dabei ist eine hohe Zentriergenauigkeit der Welle einzuhalten, da die Sonne der ersten Getriebestufe, insbesondere des schnell laufenden Servogetriebes, äußerst genau zu zentrieren ist.

Bei einer vorteilhaften Ausgestaltung ist im Bereich C ist ein radialer Übergang von dem etwas größeren Außendurchmesser des Bereiches D der Welle auf den etwas kleineren Außendurchmesser des Bereiches B vorgesehen. Vorteilhafterweise ist somit die Kerbwirkung und somit Versagensgefahr vermindert.

Bei einer vorteilhaften Ausgestaltung weist die Welle eine sogenannte Spiralnut im Bereich B zur Entlüftung auf, also eine sich am Umfang entlang schraubende Nut. Überraschend ist dabei, dass die Festigkeit nicht leidet, obwohl die Spiralnut im Bereich B mindestens durch den Bereich B3 führt und auch in den Bereich B1 hineinführt. Die Spiralnut schneidet dabei die auslaufenden Ausnehmungen der Verzahnung des Bereiches D, die ebenfalls bis in den Bereich B1 hineinlaufen. Da die Spiralnut darüber hinaus einfach und kostengünstig zu fertigen ist, ist eine Entlüftung beim Einführen der Welle erreicht, ohne dass die Festigkeit oder andere wesentliche Eigenschaften verschlechtert wären. Die Entlüftung hat den Vorteil zur Folge, dass die Zentrierung einfacher und mit geringeren Querkräften ausführbar ist.

Bei einer vorteilhaften Ausgestaltung ist die Verzahnung im Bereich D der Welle schräg verzahnt ausgeführt mit einem nichtverschwindenden Schrägungswinkel. Von Vorteil ist, dass somit besonders geräuscharme Getriebe herstellbar sind. Außerdem stören überraschenderweise die in den Bereich B1 laufenden Ausnehmungen des als Schrägverzahnungsbereich ausgeführten Bereiches D weder die Festigkeit der Welle, noch ist die reib- und formschlüssige Verbindung wesentlich weniger tragfähig. Auch die Geräuscharmut wird nicht negativ beeinflusst.

Bei einer vorteilhaften Ausgestaltung ist der Bereich E' der Bohrung gleichzeitig als Zentrierhilfe und Fertigungshilfe ausgeführt. Von Vorteil ist außerdem, dass das Aufnahmeteil beim Fertigen auf Spitzen aufspannbar ist und somit eine hohe Rundlaufgenauigkeit der Bohrung erzielbar ist. Diese Fertigungshilfe ist dabei derart ausführbar, dass sie gleichzeitig als Zentrierhilfe beim Einfädeln der Welle in die Bohrung des Aufnahmeteils verwendbar ist.

Bei einer vorteilhaften Ausgestaltung weist das Aufnahmeteil eine Montagenut auf zum Eingreifen und Abstützen eines Werkzeuges, mit der die Welle in das Aufnahmeteil einpressbar ist. Von Vorteil ist, dass somit die geforderte Zentriergenauigkeit beim Einpressen erreichbar ist.

Bei dem Verfahren zur Fertigung einer Wellen-Befestigung ist wesentlich, dass während des Einführens und/oder Einpressens eine Temperatur des Aufnahmeteils, insbesondere in seinem Inneren, und eine Temperatur der Welle, insbesondere in ihrem Inneren, ungleich sind, insbesondere unterscheidet sich die Temperatur des Aufnahmeteils und die Temperatur der Welle um mehr als 60 Kelvin. Von Vorteil ist dabei, dass eine besonders feste, in Teilbereichen des Bereiches B kraftschlüssige Verbindung nach Temperaturausgleich und dadurch bewirkter Schrumpfung entsteht. Überraschend ist dabei, dass je nach Auslegung die auf diese Weise entstandene Verbindung im Bereich B der Welle stärker vorsehbar ist, als die formschlüssige Verbindung im Bereich A.

Weitere vorteilhafte Ausgestaltungen ergeben sich aus den Unteransprüchen.

### Bezugszeichenliste

1 Welle
2 Spiralnut
3 Bohrung
4 Aufnahmeteil
5 Montagenut

Die Erfindung wird nun anhand von Abbildungen näher erläutert:

In der Figur 1a ist ein Welle 1 und ein mit einer Bohrung 3 versehenes Aufnahmeteil 4 jeweils separat gezeigt. In der Figur 1b ist das Welle 1 und das Aufnahmeteil 4 im eingepressten, also befestigten Zustand gezeigt.

Dabei weist das Welle 1 an seinem Aufnahmeteil-seitigen Ende einen gehärteten gerändelten Bereich A auf. Bei der Fertigung wird dieser Bereich zuerst mit einem Rändel versehen, danach gehärtet und am Ende durch Überschleifen auf einen definierten Außendurchmesser der Welle im Bereich A gebracht, der kleiner ist als ein Wert d.

Das Verzahnen, also Fertigen der Verzahnung, des Bereiches D umfasst die üblichen Fertigungsverfahren, wie insbesondere Fräsen unter Einsatz eines Fräsers oder Schleifen mittels einer Schleifscheibe. Wenn der Fusskreisradius der Verzahnung im Bereich D, also der jeweils tiefste Punkt der Zahnlücken, kleiner ist als der Außenradius, also der jeweils größte Radius, im Bereich B und C, wird dabei auch in den benachbarten Bereich C und auch in den Bereich B zumindest teilweise eingeschnitten, weil das jeweilige Werkzeug auf einem Radius arbeitet. Die durch die Zahnlücken der Verzahnung des Bereiches D gebildeten Ausnehmungen erstrecken sich somit abhängig von den Verzahnungsdaten in ihren Fußzonen mindestens teilweise auch in den Bereich B1 der Welle. Dieser teilweise eingeschnittene Bereich ist in der Figur 1a mit B1 bezeichnet. Die Teilbereiche des Bereiches B, welche nicht eingeschnitten sind, sind mit B2 und B3 bezeichnet. Die axiale Ausdehnung der Teilbereiche B1, B2 und B3 hängt vom Radius der Werkzeuge und von den Dimensionierungen und Abmessungen der Welle ab. Wenn der Fusskreisradius der Verzahnung im Bereich D größer ist als der Außenradius im Bereich B und C, wird in die Bereiche C und B nicht eingeschnitten.

Der Innendurchmesser der Bohrung des Aufnahmeteils ist im Bereich B' größer oder gleich dem Wert d. Besonders geeignet ist die Toleranz h7. Die Bereiche A und B3 der Welle weisen einen kleineren Außendurchmesser als der Wert d auf. Insbesondere ist die Toleranz h6 geeignet. Im Bereich B1 und B2 wird zur Erzeugung einer reib- und kraftschlüssigen Verbindung mit dem Bereich B' der Bohrung ein etwas größerer Außendurchmesser als der Wert d verwendet. Somit wird beim Einpressen in den Bereichen B1 und B2 Material verformt und eine hoch tragfähige, reibschlüssige Verbindung erzeugt.

Die Verzahnung des Bereiches D ist bei einem ersten erfindungsgemäßen Ausführungsbeispiel mit einer Schrägverzahnung ausgeführt. Daher und wegen der reib- und kraftschlüssigen Verbindung im Bereich B1 und B2 ist ein besonders geräuscharmer Betrieb der den Bereich D umfassenden Getriebestufe ermöglicht.

Bei einem weiteren erfindungsgemäßen Ausführungsbeispiel ist der Bereich D als Geradverzahnung ausgeführt zur Verwendung als Sonne bei einer eintreibenden Planetengetriebestufe.

In den gerändelten Bereich A wird bei der Fertigung der Verzahnung des Bereiches D nicht eingeschnitten. Somit ist die Rändelung des Bereiches A unabhängig von den Verzahnungsdaten des Bereiches D immer gleich. Dies hat zum Vorteil, dass beim Einführen der Welle 1 in die Bohrung 3 des Aufnahmeteils immer dieselbe Rändelung in das Aufnahmeteil eingedrückt wird und die somit geschaffene formschlüssige Verbindung zwischen Welle 1 und Aufnahmeteil 4 immer gleichartig ausgeführt ist. Es besteht also keinerlei Gefahr, dass diese Verbindung infolge ungünstiger Verzahnungsdaten des Bereiches D geschwächt würde. Insbesondere dürfen die Zähnezahlen des Bereiches A und des Bereiches D gleich sein, ohne dass die Position der Zähne am Umfang der Welle gegeneinander für die Verbindung von Bedeutung wäre.

Eine Spiralnut 2 ist im Bereich B zusätzlich eingebracht und dient zur Entlüftung beim Einführen der Welle 1 in die Bohrung 3 des Aufnahmeteils.

Beim Einführen der Welle in das Aufnahmeteil schneidet sich die harte Rändelung des Bereiches A in die Innenwand der Bohrung im Bereich A' ein, da der Durchmesser der Bohrung 3 im Bereich A' kleiner ist als der Durchmesser im Bereich B'. Der Außendurchmesser der Bereiche A und B3 der Welle ist hingegen gleich. Der Innendurchmesser im Bereich A' ist kleiner als der Außendurchmesser der Welle im Bereich A und B3.

Zwischen Bereich B und dem mit Verzahnung versehenen Bereich D liegt ein Bereich C, der einen Übergangsbereich vom größeren Außendurchmesser der Welle im Bereich D auf den kleineren Außendurchmesser im Bereich B darstellt. Dieser Übergang ist in einem ersten erfindungsgemäßen Ausführungsbeispiel gemäß Figur 1a und 1b mit einem Radius realisiert. Somit wird die Empfindlichkeit gegen Kerbwirkung vermindert. Bei weiteren erfindungsgemäßen Ausführungsbeispielen sind andere Radien oder auch andere Formen beim Übergangsbereich vorteilhaft.

In Figur 1b ist außerdem gezeigt, dass bei einem erfindungsgemäßen Ausführungsbeispiel die Bohrung 3 im Aufnahmeteil derart tief ausgeführt ist, dass ein Hohlraum vorhanden ist, der mindestens den Abstand s umfasst. Bei weiteren erfindungsgemäßen Ausführungsbeispielen entfällt dieser Hohlraum.

Bei weiteren erfindungsgemäßen Ausführungsbeispielen ist statt der Rändelung auch eine andere Verzahnung verwendbar. Unter Verzahnung ist immer zumindest auch eine Evolventenverzahnung zu verstehen.

Der Bereich E' der Bohrung 3 ist bei einem erfindungsgemäßen Ausführungsbeispiel zur Zentrierung kegelig mit einem Winkel von 60° ausgeführt. Diese Zentrierhilfe erleichtert das Einführen der Welle in die Bohrung 3 und vermindert somit Kosten und Aufwand. Bei weiteren erfindungsgemäßen Ausführungsbeispielen sind auch andere Winkel oder Zentrierhilfen vorteilhaft ausführbar. Gleichzeitig ist diese Zentrierhilfe als Fertigungshilfe zum Einspannen des Aufnahmeteils zwischen Spitzen verwendbar und somit eine vorteilige hohe Rundlaufgenauigkeit erreichbar.

Bei weiteren erfindungsgemäßen Ausführungsbeispielen ist das Aufnahmeteil von einer Kupplung oder einem Motor, insbesondere Elektromotor, umfasst. Insbesondere ist die Rotorwelle des Motors oder ein Wellenstück der Kupplung als erfindungsgemäßes Aufnahmeteil mit erfindungsgemäßer Bohrung ausgeführt.

Bei weiteren erfindungsgemäßen Ausführungsbeispielen ist das Welle eintreibendes Ritzel für ein Getriebe. Somit sind Teile eingespart und mit einem äußerst geringen Fertigungs- und Montageaufwand eine formschlüssige Verbindung geschaffen, die mit wenigen Teilen auskommt und schnell und einfach zu montieren ist.

Insbesondere ist bei weiteren erfindungsgemäßen Ausführungsbeispielen die Welle mit seinem Bereich D mindestens teilweise als Sonne eines Planetengetriebes einsetzbar. Diese direkte Ankoppelung erspart weitere Teile, wie Kupplungen oder dergleichen.

## Patentansprüche

1. Baureihe von Wellen zur Befestigung in einer Bohrung (3) eines Aufnahmeteiles (4),
wobei die Baureihe mindestens zwei verschiedene Baugrößen umfasst, die jeweils verschiedene Varianten von Wellen umfassen,
**dadurch gekennzeichnet, dass**
a) die Welle (1) jeweils mindestens vier axiale Bereiche A, B, C und D besitzt, die in alphabetischer Reihenfolge der sie bezeichnenden Buchstaben aneinandergrenzen und von denen D einen größeren Außendurchmesser als A und/oder B hat;
b) innerhalb einer Baugröße mehrere Varianten von Wellen umfasst sind, die im Bereich D der Welle (1) jeweils verschieden verzahnt sind;
c) bei der Welle (1) der Bereich A verzahnt oder gerändelt ist;
d) innerhalb einer ersten Baugröße mindestens bei einer ersten Variante die Welle (1) im Bereich B nicht verzahnt ist;
e) innerhalb der ersten Baugröße bei mindestens einer zweiten Variante die durch die Zahnlücken der Verzahnung des Bereiches D gebildeten Ausnehmungen sich in ihren Fußzonen mindestens teilweise auch in den Bereich B der Welle (1) erstrecken, also der Bereich B einen Teilbereich B1 umfasst, in den sich die Ausnehmungen erstrecken, und der Bereich B weitere Teilbereiche, insbesondere B2 und B3, umfasst, in denen keine solchen Ausnehmungen vorgesehen sind;
f) die Bohrung (3) im Aufnahmeteil (4) mindestens in drei axial aneinandergrenzende Bereiche A', B' und E' aufgeteilt ist, wobei der Bereich A' bei in dem Aufnahmeteil (4) befestigter Welle (1) dem Bereich A zugeordnet ist und wobei der Bereich B' bei in dem Aufnahmeteil (4) befestigter Welle (1) dem Bereich B zugeordnet ist, und der Bereich E' sich an den Bereich B' anschließt;
g) die Bohrung (3) im Aufnahmeteil (4) im Bereich B' einen Innendurchmesser aufweist, der mathematisch gleich oder größer ist als der Wert d;
h) der Wellenbereich B einen Teilbereich B3 umfasst, der sich an den Bereich A anschließt und der Außendurchmesser des Bereiches B3 dem Außendurchmesser des Bereiches A gleicht und kleiner ist als der Wert d;
i) der Wellenbereich B weitere Teilbereiche B1 und B2 umfasst, wobei sich der B1 an den Bereich B2 anschließt und der Bereich B2 an den Bereich B3 anschließt und wobei der Außendurchmesser der weiteren Bereich B1 und B2 stets derart größer ist als der Wert d, dass in den Bereichen B1 und B2 bei in dem Aufnahmeteil (4) eingepresster Welle (1) eine reib- und/oder kraftschlüssige Verbindung vorgesehen ist;
j) bei in dem Aufnahmeteil (4) eingepresster Welle (1) diese mit ihrem verzahnten oder gerändelten Bereich A infolge des Einpressens der Welle (1) formschlüssig in den Bereich A' der Bohrung (3) eingeschnitten ist.

2. Baureihe nach mindestens einem der vorangegangenen Ansprüche,
**dadurch gekennzeichnet, dass**
der Bereich A der Welle (1) mit dem Bereich A' des Aufnahmeteils (4) als formschlüssige Verbindung bei Überlast vorgesehen ist.

3. Baureihe nach mindestens einem der vorangegangenen Ansprüche,
**dadurch gekennzeichnet, dass**
die Verzahnung im Bereich D der Welle (1) schräg verzahnt ausgeführt ist mit einem nichtverschwindenden Schrägungswinkel.

4. Baureihe nach mindestens einem der vorangegangenen Ansprüche,
**dadurch gekennzeichnet, dass** der Bereich E' der Bohrung (3) gleichzeitig als Zentrierhilfe und Fertigungshilfe ausgeführt ist.

5. Baureihe nach mindestens einem der vorangegangenen Ansprüche,
**dadurch gekennzeichnet, dass**
das Aufnahmeteil (4) on einer Kupplung oder einem Motor, insbesondere Elektromotor, umfasst wird.

6. Baureihe nach mindestens einem der vorangegangenen Ansprüche,
**dadurch gekennzeichnet, dass** die Welle (1) eintreibendes Ritzel für ein Getriebe ist.

7. Baureihe nach mindestens einem der vorangegangenen Ansprüche,
**dadurch gekennzeichnet, dass** der Bereich D mindestens teilweise als Sonne eines Planetengetriebes einsetzbar ist.

8. Baureihe nach mindestens einem der vorangegangenen Ansprüche,
**dadurch gekennzeichnet, dass**
das Aufnahmeteil (4) eine Montagenut (5) aufweist zum Eingreifen und Abstützen eines Werkzeuges, mit der die Welle (4) in das Aufnahmeteil (1) einpressbar ist.

9. Baureihe nach mindestens einem der vorangegangenen Ansprüche,
**dadurch gekennzeichnet, dass**
die Welle (1) im Bereich B eine Spiralnut (2) also eine sich am Umfang entlang schraubende Nut, aufweist zum Druckausgleich oder Entlüften, insbesondere beim Einpressen der Welle (1) in das Aufnahmeteil (4).

10. Verfahren zur Fertigung einer Wellen-Befestigung nach mindestens einem der vorangegangenen Ansprüche,
wobei
während des Einführens und/oder Einpressens eine Temperatur des Aufnahmeteils (4), insbesondere in seinem Inneren, und eine Temperatur der Welle (1), insbesondere in ihrem Inneren, ungleich sind

11. Verfahren nach mindestens einem der vorangegangenen Ansprüche,
**dadurch gekennzeichnet, dass**
die Temperatur des Aufnahmeteils (4) und die Temperatur der Welle (1) sich um mehr als 60 Kelvin unterscheiden.

## Claims

1. A series of shafts for securing in a bore (3) of a receiving part (4),
wherein the series comprises at least two different sizes which each comprise different shaft variants,
**characterised in that**
a) the shaft (1) has in each case at least four axial regions A, B, C and D which adjoin one another in the alphabetic order of the letters designating them and of which D has a larger outside diameter than A and/or B;
b) a plurality of shaft variants are included within a size, which variants each have different toothing in region D of the shaft (1);
c) region A of the shaft (1) is toothed or knurled;
d) within a first size and at least in the case of a first variant, the shaft (1) is not toothed in region B;
e) within the first size and in the case of at least a second variant, the recesses formed by the tooth spaces of the toothing of region D extend, in their root zones, at least partially into region B of the shaft (1) too, therefore region B comprises a partial region B1, into which the recesses extend, and region B3 comprises further partial regions, in particular B2 and B3, in which no such recesses are provided;
f) the bore (3) in the receiving part (4) is divided into at least three axially adjacent regions A', B' and E', wherein regions A' is associated with region A when the shaft (1) is secured in the receiving part (4) and wherein region B' is associated with region B when the shaft (1) is secured in the receiving part (4), and region E' adjoins region B';
g) the bore (3) in the receiving part (4) has in regions B' an inside diameter mathematically equal to or greater than value d;
h) shaft region B comprises a partial region B3 which adjoins region A and the outside diameter of region B3 is equal to the outside diameter of region A, and smaller than value d;
i) shaft region B comprises further partial regions B1 and B2, wherein B1 adjoins region B2 and region B2 adjoins region B3 and wherein the outside diameter of the further regions H1 and B2 is always so much greater than value d that when the shaft (1) is force fitted in the receiving part (4), a frictionally engaged and/or non-positive locking connection is provided in regions B1 and B2;
j) with the shaft (1) force fitted in the receiving part (4), the toothed or knurled region A of the shaft cuts in a positive-locking manner into region A' of the bore (3) owing to the force fitting of the shaft (1),

2. A series according to at least one of the preceding claims, **characterised in that** region A of the shaft (1) together with regions A' of the receiving part (4) is provided as a positive-locking connection upon overload.

3. A series according to at least one of the preceding claims, **characterised in that** the toothing in region D of the shaft (1) is helical toothed with a not imperceptible angle of inclination.

4. A series according to at least one of the preceding claims, **characterised in that** region E' of the bore (3) is simultaneously in the form of a centring aid and a manufacturing aid,

5. A series according to at least one of the preceding claims, **characterised in that** the receiving part (4) is surrounded by a coupling or a motor, in particular an electric motor.

6. A series according to at least one of the preceding claims, **characterised in that** the shaft (1) is a driving pinion for gearing.

7. A series according to at least one of the preceding claims, **characterised in that** region D is at least partially useable as a sun gear of planetary gearing.

8. A series according to at least one of the preceding claims, **characterised in that** the receiving part (4) has a amounting groove (5) for engagement and support of a tool, with which one can force fit the shaft (1) into the receiving part (4).

9. A series according to at least one of the preceding claims, **characterised in that** the shaft (1) has a helical groove (2) in region B, therefore a groove circling the circumference, for pressure equalisation or ventilation, in particular upon force-fitting of the shaft (1) into the receiving part (4).

10. A method of manufacturing a shaft securing according to at least one of the preceding claims,
wherein during insertion and/or force fitting, a temperature of the receiving part (4), in particular in its interior, and a temperature of the shaft (1), in particular in its interior, are not identical.

11. A method according to at least one of the preceding claims, **characterised in that** the temperature of the receiving part (4) and the temperature of the shaft (1) differ by more than 60 Kelvin.

## Revendications

1. Gamme d'arbres destinés à être fixés dans un perçage (3) d'une pièce réceptrice (4),
la gamme comprenant au moins deux tailles de construction différentes qui comprennent chacune différentes variantes d'arbres,
**caractérisée en ce que**
a) l'arbre (1) possède au moins quatre zones axiales A, B, C et D qui sont adjacentes dans l'ordre alphabétique des lettres qui les désignent et parmi lesquelles D a un plus grand diamètre extérieur que A et/ou B ;
b) au sein d'une taille de construction sont comprises plusieurs variantes d'arbres qui présentent chaque fois une denture différente dans la zone D de l'arbre (1) ;
c) sur l'arbre (1), la zone A est dentée ou moletée ;
d) au sein d'une première taille de construction, au moins dans une première variante, l'arbre (1) n'est pas denté dans la zone B;
e) au sein de la première taille de construction, dans au moins une deuxième variante, les évidements formés par les entre-dents de la denture de la zone D s'étendent dans leurs zones de pied au moins en partie aussi dans la zone B de l'arbre (1), donc la zone B comprend une zone partielle B1 dans laquelle s'étendent les évidements et la zone B comprend d'autres zones partielles, en particulier B2 et B3, dans lesquelles aucun de ces évidements n'est prévu ;
f) le perçage (3) dans la pièce réceptrice (4) est divisé au moins en trois zones adjacentes axialement A', B' et E', la zone A' étant associée à la zone A lorsque l'arbre (1) est fixé dans la pièce réceptrice (4), la zone B' étant associée à la zone B lorsque l'arbre (1) est fixé dans la pièce réceptrice (4) et la zone E' faisant suite à la zone B' ;
g) le perçage (3) dans la pièce réceptrice (4) présente dans la zone B' un diamètre intérieur qui est mathématiquement égal ou supérieur à la valeur d ;
h) la zone d'arbre B comprend une zone partielle B3 qui fait suite à la zone A et le diamètre extérieur de la zone B3 est égal au diamètre extérieur de la zone A et inférieur à la valeur d ;
i) la zone d'arbre B comprend d'autres zones partielles B1 et B2, la zone B1 faisant suite à la zone B2 et la zone B2 faisant suite à la zone B3, et le diamètre extérieur des autres zones B1 et B2 étant touj ours supérieur à la valeur d de manière que dans les zones B1 et B2, lorsque l'arbre (1) est emmanché dans la pièce réceptrice (4), une liaison par friction et/ou par adhérence soit prévue ;
j) lorsque l'arbre (1) est emmanché dans la pièce réceptrice (4), celui-ci est entaillé par complémentarité de formes par sa zone dentée ou moletée A dans la zone A' du perçage (3) par suite de l'emmanchement de l'arbre (1).

2. Gamme selon au moins l'une des revendications précédentes,
**caractérisée en ce que**
la zone A de l'arbre (1) est prévue comme liaison par complémentarité de formes avec la zone A' de la pièce réceptrice (4) en cas de surcharge.

3. Gamme selon au moins l'une des revendications précédentes,
**caractérisée en ce que**
la denture dans la zone D de l'arbre (1) est réalisée sous forme de denture hélicoïdale avec un angle d'hélice non infinitésimal.

4. Gamme selon au moins l'une des revendications précédentes,
**caractérisée en ce que**
la zone E' du perçage (3) est réalisée à la fois comme aide au centrage et comme aide à la fabrication.

5. Gamme selon au moins l'une des revendications précédentes,
**caractérisée en ce que**
la pièce réceptrice (4) est comprise par un accouplement ou un moteur, en particulier un moteur électrique.

6. Gamme selon au moins l'une des revendications précédentes,
**caractérisée en ce que**
l'arbre (1) est un pignon menant pour un réducteur.

7. Gamme selon au moins l'une des revendications précédentes,
**caractérisée en ce que**
la zone D est utilisable au moins en partie comme planétaire d'un réducteur planétaire.

8. Gamme selon au moins l'une des revendications précédentes,
**caractérisée en ce que**
la pièce réceptrice (4) présente une rainure de montage (5) pour l'engagement et l'appui d'un outil à l'aide duquel l'arbre (1) peut être emmanché dans la pièce réceptrice (4).

9. Gamme selon au moins l'une des revendications précédentes,
**caractérisée en ce que**
l'arbre (1) présente dans la zone B une rainure hélicoïdale (2), donc une rainure s'étendant en spirale le long de la périphérie, pour l'équilibrage de pression ou la purge d'air, en particulier lors de l'emmanchement de l'arbre (1) dans la pièce réceptrice (4).

10. Procédé de fabrication d'une fixation d'arbre selon au moins l'une des revendications précédentes,
selon lequel
pendant l'introduction et/ou l'emmanchement, une température de la pièce réceptrice (4), en particulier à l'intérieur de celle-ci, et une température der l'arbre (1), en particulier à l'intérieur de celui-ci, sont inégales.

11. Procédé selon au moins l'une des revendications précédentes,
**caractérisé en ce que**
la température de la pièce réceptrice (4) et la température de l'arbre (1) diffèrent de plus de 60 kelvins.
